# FASCICULE DE BREVET EUROPEEN

(11) **EP 2 132 486 B1**
(45) Date de publication et mention de la délivrance du brevet: **13.05.2015**
(21) Numéro de dépôt: 08775633.4
(22) Date de dépôt: 05.03.2008
(51) Int. Cl.: F23D 14/14, F23D 14/16, B01J 8/06

(54) **RÉACTEUR ÉCHANGEUR COMPACT UTILISANT UNE PLURALITÉ DE BRÛLEURS POREUX ET PROCEDES UTILISANT CE REACTEUR**
KOMPAKTER AUSTAUSCHREAKTOR MIT MEHREREN PORENBRENNERN UND DIESEN REAKTOR VERWENDENDES VERFHAREN
COMPACT EXCHANGER REACTOR USING A PLURALITY OF POROUS BURNERS AND PROCESS USING SAID REACTOR

(30) Priorité: 30.03.2007 FR 0702410
(43) Date de publication de la demande: 16.12.2009
(73) Titulaire: IFP Energies nouvelles, 92852 Rueil-Malmaison Cedex (FR)
(72) Inventeur: GIROUDIERE, Fabrice, F-69530 Orlienas (FR); FISCHER, Béatrice, F-69005 Lyon (FR)
(86) Numéro de dépôt international: PCT/FR2008/000293
(87) Numéro de publication internationale: WO 2008/132313

(56) Documents cités:
- EP-A- 0 430 804
- EP-A- 0 895 806
- EP-A- 1 464 910
- DE-A1- 19 905 327
- DE-A1- 19 921 420
- GB-A- 2 359 764
- US-A- 3 119 671
- US-A- 4 900 245
- US-B1- 6 296 814

## Description

### Domaine de l'invention

L'invention concerne un nouveau réacteur échangeur selon la revendication 1 destiné à mettre en oeuvre des réactions chimiques fortement endothermiques, telles que les réactions de vaporeformage de naphta ou de gaz naturel ainsi que des procédés selon les revendications 7, 8 et 9 utilisant ce réacteur.

On entend par réacteur échangeur un réacteur chimique dans lequel la ou les réactions se déroulent à l'intérieur d'un faisceau de tubes enfermés dans une calandre, l'énergie nécessaire aux réactions étant apportée par un fluide chaud circulant à l'intérieur de ladite calandre et à l'extérieur des tubes, et cédant sa chaleur aux tubes de réaction essentiellement par convection.

Dans le réacteur échangeur selon la présente invention, l'énergie est apportée par la combustion d'un combustible contenant éventuellement de l'hydrogène, ladite combustion ayant lieu à l'intérieur même du réacteur échangeur et générant des fumées de combustion qui, pour une partie, cèdent leur énergie principalement par radiation, et, pour une autre partie, principalement par convection. On entend par "principalement" une contribution par rayonnement d'au moins 70% dans la zone dite de rayonnement, et une contribution par convection d'au moins 70 % dans la zone dite de convection.

La nouveauté du réacteur échangeur selon l'invention réside donc dans l'existence d'une zone de chauffe des tubes de réaction dans laquelle le transfert de chaleur est obtenu principalement par rayonnement.

Les brûleur équipant le réacteur échangeur selon l'invention sont des brûleurs sans pré mélange, de géométrie cylindrique, et présentant un élément poreux séparant le côté combustible du côté comburant, la combustion ayant lieu soit à l'intérieur dudit élément poreux, soit au voisinage de sa surface externe et permettant de générer dans ce dernier cas une flamme plate. Dans la suite du texte on parlera de brûleurs poreux pour désigner les brûleurs spécifiques utilisés dans le réacteur échangeur selon l'invention. On trouvera une description complète de ces brûleurs poreux dans la demande de brevet FR 2006001099.

Le combustible utilisé dans le cadre de la présente invention peut être un combustible gazeux à base d'hydrocarbures, tel que du gaz naturel. Il pourra dans certains cas contenir de l'hydrogène, voire même dans certains cas être essentiellement constitué d'hydrogène.

Le comburant peut être tout gaz contenant de l'oxygène, en particulier de l'air, mais aussi de l'air enrichi ou appauvri en oxygène. Le comburant peut même dans un cas particulier être de l'oxygène pur.

De manière générale, les réacteurs échangeurs peuvent se définir comme une catégorie de réacteurs dans lesquels l'énergie nécessaire aux réactions chimiques est apporté par un fluide chaud, l'échange de chaleur entre ledit fluide chaud et la charge à traiter circulant à l'intérieur d'une pluralité de tubes, se faisant essentiellement par convection. Le plus souvent, les réacteurs échangeurs sont de faible capacité (de l'ordre de 1000 à 5000 Nm3/h de production d'H2 ), et utilisés pour de petites productions locales. On peut citer comme exemple d'un réacteur échangeur de petite capacité, le réacteur décrit dans la demande de brevet WO 20011056690 ou dans le brevet US 4 919 844.

Le réacteur selon la présente invention est un réacteur échangeur qui peut réaliser de petites productions d'hydrogène, comme ceux de l'art antérieur, mais également atteindre de grandes capacités, de l'ordre de 100 000 Nm3/h de production d'H2, telles que celles couramment atteintes dans les fours de vaporeformage.

Dans la mesure où la production de l'énergie dans le réacteur échangeur selon l'invention est réalisée par une combustion à l'intérieur même du réacteur échangeur, sous la forme d'une flamme plate, on peut aussi le comparer à un four. Il se distingue néanmoins d'un four de vaporeformage par sa capacité à travailler sous pression, alors que le niveau de pression à l'intérieur des fours de vaporeformage est généralement limité à 2 bars absolus.

Le présent réacteur peut, moyennant certains aménagements au niveau de la distribution des fluides réactifs, admettre des pressions côté calandre de l'ordre de la dizaine de bars (1 bar= 10⁵ Pascal).

Le réacteur échangeur selon l'invention est donc un réacteur échangeur à génération de chaleur par combustion in situ, utilisant un brûleur spécifique permettant de générer une flamme plate, et permettant de couvrir des capacités de production d'hydrogène allant de à 500 à 100 000 Nm3/h.

### Examen de l'art antérieur

L'art antérieur dans le domaine des réacteur échangeur présentant une combustion "in situ" est représenté par:
La demande de brevet WO 2007 000 244 A1 décrit un réacteur échangeur de petite capacité destiné à des productions d'hydrogène de l'ordre de 1000 Nm³/heure et comprenant une première zone de génération de chaleur au moyen d'un brûleur, suivie d'une seconde zone d'échange par convection entre les fumées de combustion générées dans la première zone et des tubes à l'intérieur desquels circule le mélange réactif. Dans ce réacteur la zone de génération de chaleur au moyen d'un brûleur ne contient pas de tubes réactionnels, et le brûleur est un brûleur conventionnel.

Le brevet US 6,136,279 décrit un four de vaporeformage comprenant une enveloppe cylindrique enfermant une pluralité de tubes à chauffer et un brûleur lui même contenu dans une enveloppe interne à l'enveloppe cylindrique et définissant une chambre de combustion. L'enveloppe interne contenant le brûleur est séparée des tubes à chauffer de telle manière que les tubes ne voient pas la flamme et sont chauffés uniquement par la convection des fumées chaudes. Un réacteur utilisant des tubes réactifs de type baïonnettes est parailleur décrit par le brevet US3119671.

Dans le réacteur selon la présente invention du fait de l'utilisation d'un brûleur spécifique comportant un élément poreux, il est possible d'implanter les dits brûleurs directement entre les tubes à chauffer, lesquels sont donc chauffés à la fois par la convection des fumées chaudes, mais aussi sur une partie au moins de leur longueur, par radiation directe.

### Description sommaire des figures

La figure 1 représente une section de profil du réacteur échangeur selon l'invention.
La figure 2 représente une section horizontale du réacteur échangeur qui permet de visualiser la disposition relative des tubes et des brûleurs.
la figure 3 représente un brûleur poreux utilisé dans le réacteur échangeur selon l'invention.

### Description sommaire de l'invention

Le réacteur échangeur selon la présente invention est destiné à la mise en oeuvre de réactions fortement endothermiques et à des niveaux de températures pouvant aller jusqu'à 950°C. Typiquement, il peut être utilisé pour le vaporeformage de coupes hydrocarbonées, notamment le naphta ou le gaz naturel en vue de la production d'hydrogène.

Étant donné la nature des brûleurs utilisés dans le réacteur et la configuration de ces brûleurs par rapport aux tubes à chauffer, il est possible de réaliser le long desdits tubes un profil thermique beaucoup plus fin que celui que l'on peut atteindre par les technologies de l'art antérieur.

Les brûleurs utilisés possèdent en effet un distributeur de combustible qui est conçu sous forme de plusieurs tronçons ayant chacun un diamètre d'orifice donné de manière à permettre une modulation du flux thermique selon l'axe longitudinal du brûleur qui se confond avec l'axe longitudinal des tubes à chauffer, et avec l'axe longitudinal du réacteur échangeur lui même.

En second lieu, du fait de l'existence d'un élément poreux dans la structure du brûleur, la flamme résultante est une flamme "plate" qui permet une combustion beaucoup plus homogène qu'une flamme traditionnelle ( c'est à dire se développant dans un volume à 3 dimensions plus ou moins bien contrôlé). Cette flamme plate diminue considérablement le risque de points chauds, ce qui est un aspect particulièrement important vis à vis de la sécurité opératoire de ce type de réacteurs mettant en oeuvre côté tube des pressions pouvant atteindre plusieurs dizaines de bars, et générant des effluents contenant de l'hydrogène.

Enfin, la forme "plate" de cette flamme, c'est à dire confinée sous forme d'un anneau entourant le brûleur au voisinage immédiat de l'élément poreux faisant partie dudit brûleur, va permettre de rapprocher les tubes à chauffer et d'atteindre un degré de compacité nettement amélioré par rapport aux technologies de l'art antérieur, notamment celle décrite dans la demande de brevet WO 2007 000244.

Le réacteur échangeur selon l'invention est défini par la revendication 1.

La zone de chauffe par convection peut être équipée d'un baffle permettant d'obtenir une vitesse de circulation des fumées de combustion le long du tube à chauffer généralement comprise entre 5 m/s et 60 m/s, et préférentiellement comprise entre 20 m/s et 50 m/s.

Le nombre de tubes à chauffer par m² de section du réacteur est selon l'invention compris entre 4 et 17, et préférentiellement compris entre 5 et 13. On entend par section du réacteur la section géométrique supposée vide de tout interne.

Les tubes sont de type baïonnette, ils forment selon l'invention un pas triangulaire avec une distance centre à centre préférentiellement comprise entre 2 et 4 fois le diamètre intérieur de l'enveloppe externe (6).

La zone de circulation des fumées peut comporter dans certains cas, dans sa partie supérieure, une plaque de déflexion (14) située à une distance d'au moins 5 cm par rapport à la plaque tubulaire (15) qu'elle protège.

Le combustible utilisé dans les brûleurs poreux est généralement un combustible gazeux de composition chimique quelconque, tel en particulier que du gaz naturel. Il peut dans certains cas contenir une partie de l'effluent réactionnel, après réaction de transformation du CO en CO2 et élimination dudit CO2 et de l'eau. Dans certains cas, il peut être constitué d'hydrogène dans une proportion molaire pouvant aller de 5% à 100%, c'est à dire qu'il peut éventuellement être constitué d'hydrogène pur.

L'invention concerne également un procédé de vaporeformage mettant en oeuvre le réacteur échangeur selon l'invention, et utilisant préférentiellement comme charge du gaz naturel en vue de la production d'hydrogène.

### Description détaillée de l'invention

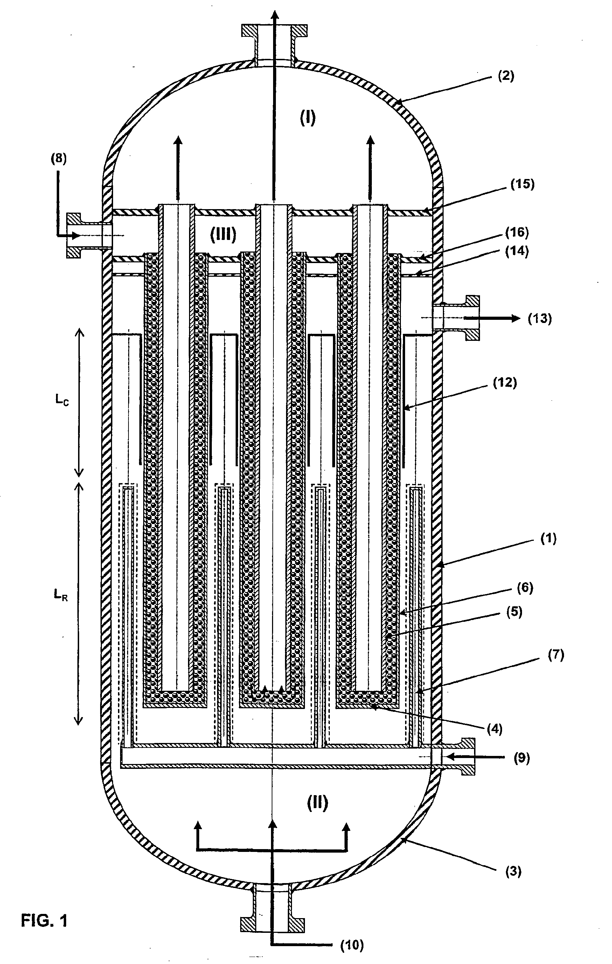

La description qui suit est faite au moyen de la figure 1 qui correspond à une coupe longitudinale du réacteur selon l'invention.

Le réacteur échangeur est composé d'une enveloppe externe comprenant une partie cylindrique (1) approximativement verticale, complétée dans sa partie supérieure par une calotte de forme approximativement ellipsoïdale (2), et dans sa partie inférieure par un fond (3) de forme approximativement ellipsoïdale. L'ensemble des parties (1), (2) et (3) est appelé calandre.

La calandre enferme une pluralité de tubes (4) s'étendant selon l'axe vertical du réacteur, et possédant un organe de distribution (8) des réactifs et un organe de collecte (11) des effluents, traversant la calandre et permettant la communication dudit réacteur avec l'extérieur.

Sur la figure (1) on a représenté des tubes de type baïonnette ayant l'entrée (8) des fluides réactifs et la sortie (11) des effluents situés sur la même extrémité supérieure du réacteur.

Bien entendu, cette représentation n'a rien de limitatif, et l'entrée et la sortie des fluides réactifs pourraient être situées à l'extrémité inférieure du réacteur.

Les tubes baïonnette (4) du fluide à traiter sont constitués d'une enveloppe externe cylindrique (6) à l'intérieur de laquelle se trouve un tube (5) ouvert à son extrémité supérieure débouchant dans la partie supérieure (I) du réacteur, et ouvert à son extrémité inférieure débouchant dans l'enveloppe cylindrique (6).

Pour la bonne clarté de la description qui suit, on supposera que l'entrée du fluide à traiter se fait par la partie supérieure (III) du réacteur au moyen d'un organe de distribution possédant au moins une ouverture (8) communiquant avec l'extérieur du réacteur échangeur, permettant l'entrée du fluide à traiter, et possédant une pluralité d'ouvertures communiquant directement avec la partie annulaire des tubes (4).

La zone (III) est comprise entre la première plaque tubulaire (15) à laquelle sont fixées les enveloppes externes (6) des tubes (4) et la seconde plaque tubulaire (16) à laquelle sont fixés les tubes internes (5).

La zone annulaire des tubes (4) est délimitée par la paroi interne de l'enveloppe (6) et la paroi externe du tube interne (5), ladite zone annulaire étant généralement remplie de catalyseur. Le catalyseur de vaporeformage est généralement à base de nickel et se présente le plus souvent sous la forme de petits cylindres de diamètre compris entre 8 mm et 15 mm, et de hauteur comprise entre 5 mm et 10 mm. L'invention n'est aucunement liée à un type de catalyseur ou à une forme particulière de ce dernier.

Le fluide à traiter circule en descendant le long de la dite zone annulaire jusqu'à son extrémité inférieure, puis passe après un retournement à 180° dans l'intérieur du tube interne (5). Le fluide à traiter remonte le long dudit tube interne (5) dont l'extrémité supérieure débouche dans la partie supérieure (I) du réacteur échangeur.

Le long de la partie descendante de son parcours à l'intérieur de la zone annulaire du tube (4), le fluide à traiter est en premier lieu chauffé sur une longueur Lc principalement par convection, puis en second lieu chauffé sur une longueur Lr principalement par radiation. Les zones correspondantes à la longueur Lc et à la longueur Lr sont appelées respectivement zone convective et zone radiative. C'est un aspect important de la présente invention de pouvoir moduler la répartition de la zone convective et de la zone radiative en jouant d'une part sur la longueur des brûleurs poreux (7), d'autre part sur la répartition des orifices de sortie du combustible au niveau des brûleurs poreux (7).

La portion Lc correspondant au chauffage par convection peut comporter un baffle ou tout autre système équivalent (12) permettant d'accélérer les fumées de combustion selon une direction sensiblement parallèle à la longueur des tubes (4) de manière à favoriser l'échange de chaleur par convection.

De manière préférée, la vitesse longitudinale des fumées le long de la zone convective est comprise entre 5 m/s et 60 m/s, et de manière encore préférée est comprise entre 10 m/s et 50 m/s.

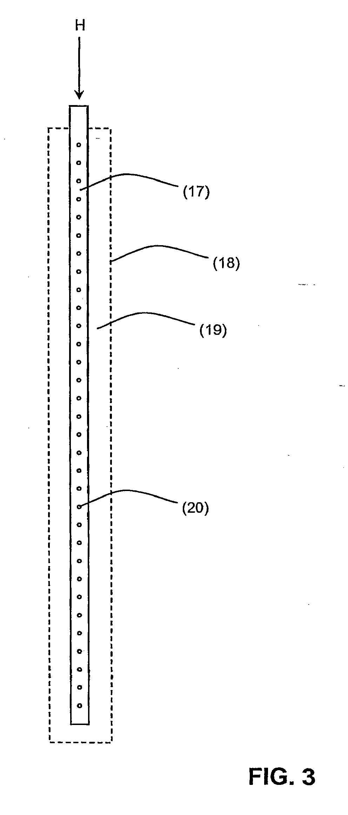

La figure 3 est une vue schématique d'un brûleur poreux utilisé dans le réacteur échangeur selon la présente invention.

Les brûleurs poreux utilisés dans le réacteur échangeur selon l'invention sont des brûleur sans pré mélange, de géométrie cylindrique, de longueur Lb et de diamètre Db, avec un rapport Lb/Db compris entre 10 et 500, et préférentiellement compris entre 30 et 300. Ces brûleurs possèdent un distributeur central de combustible (17) ayant une répartition d'orifices (20) non uniforme, et possèdent un élément poreux (18) de forme annulaire entourant le distributeur central (17) au moins sur toute sa longueur Lb, l'épaisseur dudit élément poreux (18) étant de préférence comprise entre 0,5 et 5 cm, et la surface interne dudit poreux (18) étant de préférence située à une distance du distributeur central (17) comprise entre 0,5 cm et 10 cm. Il s'agit précisément de la distance correspondant à la zone notée (19) sur la figure 3.

La porosité de l'élément poreux (18) est généralement inférieure à 50 %, et préférentiellement inférieure à 30 %. Cette porosité est définie comme le volume vide rapportée au volume apparent de l'élément poreux. Le plus souvent cette porosité est homogène sur l'ensemble de l'élément poreux, mais dans certains cas, elle pourra être différenciée, c'est à dire posséder une valeur différente selon plusieurs zones dudit élément poreux.

Les brûleurs poreux (7) utilisés dans la présente invention ont un distributeur central (17) qui peut posséder un unique tronçon avec un seul diamètre d'orifice ou être divisé en au moins deux tronçons, chaque tronçon ayant des orifices (20) de même diamètre, et les différents tronçons ayant des diamètres différents de l'un à l'autre.

Par exemple, le distributeur central (17) peut être divisé en au moins deux tronçons, chaque tronçon ayant des orifices (20) de diamètre croissant avec la distance axiale le long du distributeur dans le sens d'écoulement du combustible.

A titre d'exemple nullement limitatif des différents modes de réalisation du distributeur des brûleurs poreux (7), le distributeur central (17) peut être divisé en au moins deux tronçons, chaque tronçon ayant des orifices (20) de diamètre croissant selon une loi de type exponentiel dans le sens de l'écoulement du combustible. Cette disposition permet de réaliser tout au long du brûleur poreux (7) un flux thermique approximativement constant, ce qui ne serait pas le cas avec un unique diamètre d'orifice, en raison de la perte de charge le long du distributeur qui aboutirait nécessairement à un débit de combustible plus faible sur les orifices les plus éloignés de l'extrémité d'introduction du combustible dans ledit distributeur. Cet aspect est d'autant plus important dans le cadre de la présente invention que les brûleurs poreux peuvent avoir des longueurs Lb de 10 m ou plus, et pouvant aller jusqu'à 15 mètres.

Les brûleurs poreux (7) sont alimentés en combustible (noté (H) sur la figure 3) par l'organe de distribution (9) qui peut être de tout type connu de l'homme du métier, par exemple en forme de râteau, de manière à alimenter uniformément la pluralité des brûleurs poreux (7). La présente invention n'est aucunement liée à un type particulier de distributeur de combustible.

Les brûleurs (7) s'étendent verticalement sur une longueur Lb et sont disposés de manière que la distance entre un brûleur donné et le (ou les) tubes à chauffer les plus proches soit selon l'invention comprise entre 100 mm et 700 mm et de manière plus préférée comprise entre 150 mm et 500 mm. Cette distance est définie comme la distance séparant l'axe du brûleur de l'axe du tube, dite distance "centre à centre".

La longueur Lb des brûleurs poreux est en relation avec la longueur Lt des tubes à chauffer, et sera selon l'invention comprise entre 0,1 et 0,8 fois la longueur desdits tubes, et préférentiellement comprise entre 0,2 et 0,7 fois la longueur des tubes. Compte tenu de la longueur des tubes à chauffer, la longueur des brûleurs poreux sera généralement comprise entre 2 et 15 mètres, et préférentiellement entre 4 et 12 mètres.

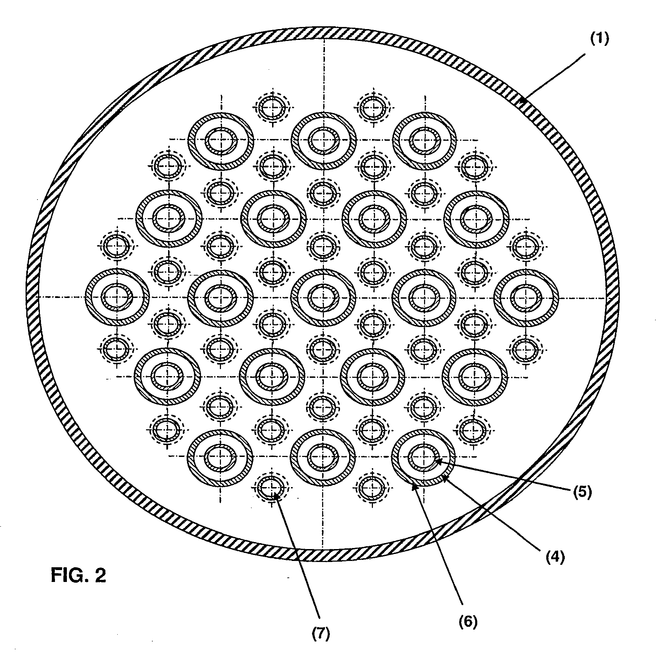

La figure 2 montre une disposition typique des tubes à chauffer (4) et des brûleurs poreux (7) où les tubes sont organisés selon un pas triangulaire avec une distance centre à centre entre tubes égale à 3 fois le diamètre intérieur de l'enveloppe externe (6) des tubes (4).

On constate sur la vue de dessus de la figure 2 qu'un tube donné se trouve entouré en moyenne de 6 brûleurs, les brûleurs formant un pas hexagonal.

La figure 2 n'est en aucun cas limitative des diverses configurations de répartition que peuvent prendre les brûleurs (7) et les tubes (4).

Pour des raisons de compacité, la configuration selon l'invention est celle de tubes formant un pas triangulaire.

Le combustible pourra être de tout type disponible sur le site où est installé le réacteur échangeur, le plus souvent une raffinerie ou un complexe pétrochimique. Par exemple, le combustible peut être du gaz naturel ou un gaz issu de la purge de certaines unités de la raffinerie ( appelé "off gaz" dans la terminologie anglo saxonne qu'on peut traduire par gaz de purge).

Le combustible peut contenir de l'hydrogène dans une proportion comprise entre 5% et 100% molaire, c'est à dire qu'il peut être constitué d'hydrogène pur.

Un exemple de composition en pourcentage molaire d'un tel gaz est donnée ci dessous:
H2: 27,6%
CH4: 35,6%
C2H6: 19,2%
C3H8: 9,9%
C4H10 et plus lourds: 7,7%

Le combustible pourra aussi être constitué d'une partie de la production du gaz riche en H2, effluent du réacteur échangeur après réaction de conversion du CO en CO2, extraction dudit CO2 et condensation de l'eau.

Un exemple typique d'un tel combustible est donné ci dessous en pourcentage molaire:
H2: 92,10%
CH4: 5,35%
CO2: 0,78%
CO: 1,5%
N2: 0,25%

Le brûleur poreux utilisé dans la présente invention permet de traiter tout combustible contenant de l'hydrogène, dans une proportion comprise entre 5% et 100% molaire.

Dans certains cas, le combustible peut être en partie constitué d'une fraction de l'effluent réactionnel du réacteur échangeur.

Le comburant, généralement de l'air éventuellement enrichi en oxygène, est admis par la tubulure (10) située dans la partie inférieure du réacteur.

La combustion a lieu généralement à la surface de l'élément poreux constituant le brûleur (7). Du fait de cet élément poreux, le brûleur est sans prémélange. La flamme résultant de la combustion est une flamme localisée au voisinage immédiat de l'élément poreux, et pour cette raison appelée flamme plate.

Les fumées de combustion libérées à une température pouvant atteindre 1000°C (la valeur précise dépend de l'excès d'air pratiqué) chauffent les tubes principalement par rayonnement sur une fraction de leur longueur (Lr) correspondant approximativement à la longueur du brûleur (Lb), puis principalement par convection sur le reste de la longueur du tube ( Lc) qui s'étend jusqu'à la plaque de protection (14).

Les fumées ne sont pas en contact avec la plaque tubulaire (15) pour éviter tout problème d'écart de température trop important entre les 2 faces de ladite plaque tubulaire, la face orientée vers la région (III) étant à la température d'admission des fluides réactifs soit une température généralement comprise entre 300°C et 550 °C, et la face orientée vers la région (I) étant à une température voisine de la température de sortie des effluents réactionnels, soit une température généralement comprise entre 550°C et 850°C.

Une plaque de protection (14) sensiblement parallèle à la plaque tubulaire (15) est donc installée en amont de ladite plaque tubulaire (15) de manière à réaliser une protection thermique de ladite plaque (15).

Les fumées sont évacuées du réacteur échangeur par la tubulure de sortie (13), préférentiellement située entre la plaque de protection (14) et le baffle (12).

### Exemples

### Exemple 1:Dimensionnement d'un réacteur échangeur selon l'invention avec une capacité de production d'hydrogène de 7 000 Nm3/heure.

Le réacteur échangeur est destiné à produire 7000 Nm3/heure d'hydrogène par vaporeformage de gaz naturel.

Le combustible utilisé est un gaz de purge de raffinerie qui a la composition molaire suivante:
H2: 27,6%
CH4: 35,6%
C2H6: 19,2%
C3H8: 9,9%
C4H10 et plus lourds: 7,7%

Le débit de combustible est de 150 kilomoles/h:
Hauteur total du réacteur ( avec les fonds supérieur et inférieur): 15m
Diamètre du réacteur: 2m
Rapport H/D: 7,5
Les tubes sont de type baïonnette
Longueur des tubes: 12m
Diamètre extérieur des tubes à chauffer: 200mm
Diamètre extérieur du tube interne: 40 mm
Diamètre extérieur des brûleurs poreux: 100mm
Longueur des brûleurs poreux: 5m
Distance entre à centre des tubes à chauffer: 300mm
Nombre de tubes : 19 tubes répartis en pas triangulaire
Nombre de brûleurs poreux: 36

### Exemple 2: Dimensionnement d'un réacteur échangeur selon l'invention avec une capacité de production d'hydrogène de 90 000Nm3/heure.

Le réacteur échangeur est destiné à produire 90 000 Nm3/heure d'hydrogène par vaporeformage de gaz naturel.

Le combustible utilisé est une partie de l'effluent du réacteur échangeur après réaction de transformation du CO en CO2 et captation de l'eau.

Le combustible a la composition suivante en % molaire:
H2: 92,10%
CH4: 5,35%
CO2: 0,78%
CO: 1,5%
N2: 0,25%.

Hauteur totale du réacteur ( avec les fonds supérieur et inférieur): 16m
Diamètre du réacteur: 7m
Rapport H/D: 2,3
Les tubes sont de type baïonnette
Longueur des tubes: 12m
Diamètre extérieur des tubes à chauffer: 200mm
Diamètre extérieur du tube interne: 40 mm
Diamètre extérieur des brûleurs poreux : 100mm
Longueur des brûleurs poreux: 5m
Distance entre à centre des tubes à chauffer: 300mm
Nombre de tubes : 235 tubes répartis en pas triangulaire
Nombre de brûleurs poreux : 445

## Revendications

1. Réacteur échangeur pour la mise en oeuvre de réactions fortement endothermiques de rapport ( H/D) soit hauteur (H) sur diamètre (D) compris entre 2 et 8, comportant une calandre de forme globalement cylindrique (1) fermée dans sa partie supérieure par une calotte (2) de forme sensiblement ellipsoïdale et dans sa partie inférieure par un fond (3) de forme sensiblement ellipsoïde, la dite calandre (1) enfermant une pluralité de tubes verticaux (4) de type baïonnette, à l'intérieur desquels circulent les réactifs, les tubes baïonnettes (4) formant un pas triangulaire avec une distance centre à centre comprise entre 2 et 4 fois le diamètre intérieur de l'enveloppe externe (6) desdits tubes, les tubes baïonnettes (4) s'étendant le long de la partie cylindrique de la calandre (1) et ayant une longueur Lt, les dits tubes baïonnettes ayant une extrémité communiquant avec l'extérieur du réacteur échangeur, et les dits tubes baïonnettes étant chauffés par une pluralité de brûleurs poreux sans pré mélange (7) de longueur Lb, s'étendant verticalement entre les tubes à chauffer (4) de telle manière que le rapport Lb/Lt soit compris entre 0,1 et 0,8 et préférentiellement compris entre 0,2 et 0,7 et de manière que la distance centre à centre entre un brûleur poreux donné et le ou les tubes baïonnette voisins (4) est comprise entre 100 mm et 500 mm, et le nombre de tubes baïonnettes (4) à chauffer par m² de section utile du réacteur étant compris entre 4 et 17, et préférentiellement entre 5 et 13.

2. Réacteur échangeur selon la revendication 1, dans lequel l'entrée des réactifs et la sortie des effluents se fait dans la partie supérieure du réacteur (I), et la distribution du combustible dans les brûleurs poreux (7) est située dans la partie inférieure (II) du réacteur.

3. Réacteur échangeur selon l'une quelconque des revendications 1 à 2, dans lequel la zone de circulation des fumées comporte dans sa partie supérieure une plaque de déflexion (14) située à une distance d'au moins 5 cm par rapport à la plaque tubulaire (15) qu'elle protège.

4. Réacteur échangeur selon l'une quelconque des revendications 1 à 3, dans lequel le combustible utilisé dans les brûleurs poreux contient de l'hydrogène dans une proportion molaire comprise entre 5% et 100%.

5. Réacteur échangeur selon l'une quelconque des revendications 1 à 4, dans lequel l'élément poreux constitutif des brûleurs poreux (7) a une porosité inférieure à 50 %, et préférentiellement inférieure à 30 %.

6. Réacteur échangeur selon l'une quelconque des revendications 1 à 5, dans lequel le distributeur central (17) des brûleurs (7) est divisé en au moins deux tronçons, chaque tronçon ayant des orifices (20) de diamètre croissant avec la distance axiale le long du distributeur dans le sens d'écoulement du combustible.

7. Procédé de vaporeformage mettant en oeuvre le réacteur échangeur selon l'une quelconque des revendications 1 à 6, utilisant comme charge une coupe naphta en vue de la production d'hydrogène.

8. Procédé de vaporeformage mettant en oeuvre le réacteur échangeur selon l'une quelconque des revendications 1 à 6, utilisant comme charge du gaz naturel en vue de la production d'hydrogène.

9. Procédé de vaporeformage mettant en oeuvre le réacteur échangeur selon l'une quelconque des revendications 1 à 6, dans lequel la zone de chauffe par convection dudit réacteur échangeur est équipée d'un baffle permettant d'obtenir une vitesse de circulation des fumées de combustion le long du tube à chauffer comprise entre 5 m/s et 60 m/s, et préférentiellement entre 20 m/s et 50 m/s.

## Patentansprüche

1. Austauschreaktor für den Einsatz von stark endothermen Reaktionen mit einem Verhältnis (H/D), d.h. Höhe (H) zu Durchmesser (D) zwischen 2 und 8, umfassend einen Kalander von global zylindrischer Form (1), der in seinem oberen Teil durch eine Kappe (2) von im Wesentlichen elliptischer Form und in seinem unteren Teil durch einen Boden (3) von im Wesentlichen elliptischer Form geschlossen ist, wobei der Kalander (1) eine Vielzahl von vertikalen Rohren (4) des Typs Bajonett einschließt, in denen die Reagenzien zirkulieren, wobei die Bajonettrohre (4) einen Dreiecksweg mit einem Abstand von Mitte zu Mitte zwischen 2- und 4-mal den Innendurchmesser der äußeren Hülle (6) der Rohre bilden, wobei sich die Bajonettrohre (4) entlang des zylindrischen Teils des Kalanders (1) erstrecken und eine Länge Lt aufweisen, wobei die Bajonettrohre ein Ende haben, das mit dem Außenbereich des Austauschreaktors in Verbindung steht, und wobei die Bajonettrohre durch eine Vielzahl von Porenbrennern ohne Vormischung (7) der Länge Lb erhitzt werden, die sich vertikal zwischen den zu erhitzenden Rohren (4) erstrecken, so dass das Verhältnis Lb/Lt zwischen 0,1 und 0,8 und vorzugsweise zwischen 0,2 und 0,7 beträgt, und dass der Abstand von Mitte zu Mitte zwischen einem gegebenen Porenbrenner und dem oder den benachbarten Bajonettrohr(en) (4) zwischen 100 mm und 500 mm beträgt, und wobei die Anzahl von zu erhitzenden Bajonettrohren (4) pro m² Nutzquerschnitt des Reaktors zwischen 4 und 17 und vorzugsweise zwischen 5 und 13 beträgt.

2. Austauschreaktor nach Anspruch 1, bei dem der Eingang der Reagenzien und der Ausgang der Abflüsse im oberen Teil des Reaktors (I) erfolgen und die Verteilung des Brennstoffes in den Porenbrennern (7) im unteren Teil (II) des Reaktors vorgesehen ist.

3. Austauschreaktor nach einem der Ansprüche 1 bis 2, bei dem die Zirkulationszone der Rauchgase in ihrem oberen Teil eine Ablenkplatte (14) umfasst, die sich in einem Abstand von mindestens 5 cm in Bezug zu der röhrenförmigen Platte (15), die sie schützt befindet.

4. Austauschreaktor nach einem der Ansprüche 1 bis 3, bei dem der in den Porenbrennern verwendete Brennstoff Wasserstoff in einem Molverhältnis zwischen 5% und 100% enthält.

5. Austauschreaktor nach einem der Ansprüche 1 bis 4, bei dem das poröse Element, das die Porenbrenner (7) bildet, eine Porosität unter 50% und vorzugsweise unter 30% hat.

6. Austauschreaktor nach einem der Ansprüche 1 bis 5, bei dem der zentrale Verteiler (17) der Brenner (7) in mindestens drei Abschnitte unterteilt ist, wobei jeder Abschnitt Öffnungen (20) mit einem mit dem Axialabstand entlang des Verteilers in Abflussrichtung des Brennstoffes steigenden Durchmesser hat.

7. Dampfreformierungsverfahren, das den Austauschreaktor nach einem der Ansprüche 1 bis 6 einsetzt, unter Verwendung eines Naphta-Schnittes im Hinblick auf die Wasserstofferzeugung.

8. Dampfreformierungsverfahren, das den Austauschreaktor nach einem der Ansprüche 1 bis 6 einsetzt, unter Verwendung von Erdgas im Hinblick auf die Wasserstofferzeugung.

9. Dampfreformierungsverfahren, das den Austauschreaktor nach einem der Ansprüche 1 bis 6 einsetzt, bei dem die Konvektionsheizzone des Austauschreaktors mit einem Leitblech ausgestattet ist, das es ermöglicht, eine Zirkulationsgeschwindigkeit der Verbrennungsgase entlang des zu erhitzenden Rohrs zwischen 5 m/s und 60 m/s und vorzugsweise zwischen 20 m/s und 50 m/s zu erzielen.

## Claims

1. An exchanger-reactor for carrying out highly endothermic reactions, in which the ratio H/D between the height H of the reactor and its diameter D is in the range 2 to 8, said exchanger-reactor comprising a generally cylindrical shell (1) closed at its upper portion by a cap (2) which is substantially ellipsoidal in shape and in its lower portion by a bottom (3) of substantially ellipsoidal shape, said shell (1) enclosing a plurality of vertical bayonet tubes (4) within which the reactant fluids circulate, said bayonet tubes forming a triangular spacing pattern with a center-to-center distance which is in the range 2 to 4 times the internal diameter of the external envelope (6) of said tube, said bayonet tubes (4) extending along the cylindrical portion of the shell (1) and having a length Lt, said bayonet tubes (4) having one end communicating with the outside of the exchanger-reactor, and said bayonet tubes (4) being heated by a plurality of porous no pre-mix burners (7) of length Lb, extending vertically between the tubes to be heated (4) such as the ratio Lb/Lt is in the range 0.1 to 0.8, preferably in the range 0.2 to 0.7, and the centre-to-centre distance between a given burner and the neighboring tube or tubes being in the range 100 mm to 500 mm, and the number of tubes to be heated per m² of effective reactor section being in the range 4 to 17, preferably in the range 5 to 13.

2. An exchanger-reactor according to claim 1, in which the reactants enter into and the effluents exit from the upper portion (I) of the reactor, the fuel in the porous burners (7) being distributed in the lower portion (II) of the reactor.

3. An exchanger-reactor according to any one of claims 1 to 2, in which the upper portion of the fume circulation zone comprises a deflection plate (14) located at a distance of at least 5 cm with respect to the tubular plate (15) which it protects.

4. An exchanger-reactor according to any one of claims 1 to 3, in which the fuel used in the porous burners contains hydrogen in a molar proportion in the range 5% to 100%.

5. An exchanger-reactor according to any one of claims 1 to 4, in which the porosity of the porous constituent element of the porous burners (7) is less than 50%, preferably less than 30%.

6. An exchanger-reactor according to any one of claims 1 to 5, in which the central distributor (17) of the burners (7) is divided into at least two sectors, each sector having orifices (20) with a diameter which increases with axial distance along the distributor in the direction of fuel flow.

7. A steam reforming process employing an exchanger-reactor according to any one of claims 1 to 6, using a naphtha cut as a feed, for the production of hydrogen.

8. A steam reforming process employing an exchanger-reactor according to any one of claims 1 to 6, using natural gas as a feed, for the production of hydrogen.

9. A steam reforming process employing an exchanger-reactor according to any one of claims 1 to 6, in which the convection heating zone is provided with a baffle to obtain a combustion fume circulation rate along the heating tube in the range 5 m/s to 60 m/s, preferably in the range 20 m/s to 50 m/s.
